# EUROPEAN PATENT SPECIFICATION

(11) **EP 2 627 194 B1**
(45) Date of publication and mention of the grant of the patent: **27.05.2015**
(21) Application number: 11761084.0
(22) Date of filing: 27.09.2011
(51) Int. Cl.: A23K 1/16, A23K 1/18

(54) **USE OF BENZOIC ACID OR SALT THEREOF TO REDUCE URINARY TRACT DISORDERS IN RUMINANTS**
VERWENDUNG VON BENZOESÄURE ODER EINES SALZES DARAUS ZUR VERRINGERUNG VON HARNWEGSERKRANKUNGEN BEI WIEDERKÄUERN
UTILISATION D'ACIDE BENZOÏQUE OU D'UN DE SES SELS POUR RÉDUIRE LES TROUBLES DES VOIES URINAIRES CHEZ LES RUMINANTS

(30) Priority: 13.10.2010 EP 10187372
(43) Date of publication of application: 21.08.2013
(73) Proprietor: DSM IP Assets B.V., 6411 TE Heerlen (NL)
(72) Inventor: BEGOS, Elise, CH-4002 Basel (CH); BROZ, Jiri, CH-4002 Basel (CH)
(74) Representative: Barthelemy de Saizieu, Antoine
(86) International application number: PCT/EP2011/066716
(87) International publication number: WO 2012/049013

(56) References cited:
- US-A- 4 515 780
- US-A- 5 603 945
- US-A1- 2003 049 363
- JANKE JARED J ET AL: "Use of Walpole's solution for treatment of goats with urolithiasis: 25 cases (2001-2006)", JOURNAL OF THE AMERICAN VETERINARY MEDICAL ASSOCIATION, AMERICAN VETERINARY MEDICAL ASSOCIATION, US, vol. 234, no. 2, 15 January 2009 (2009-01-15), pages 249-252, XP008133597, ISSN: 0003-1488
- ASAKURA ET AL: "THE EFFECT OF CALPROTECTIN ON THE NUCLEATION AND GROWTH OF STRUVITE CRYSTALS AS ASSAYED BY LIGHT MICROSCOPY IN REAL-TIME", JOURNAL OF UROLOGY, LIPPINCOTT WILLIAMS & WILKINS, BALTIMORE, MD, US, vol. 159, no. 4, 1 April 1998 (1998-04-01) , pages 1384-1389, XP005565973, ISSN: 0022-5347, DOI: DOI:10.1016/S0022-5347(01)63621-8
- PAUL E ET AL: "Urolithiasis on the ketogenic diet with concurrent topiramate or zonisamide therapy", EPILEPSY RESEARCH, ELSEVIER SCIENCE PUBLISHERS, AMSTERDAM, NL, vol. 90, no. 1-2, 1 June 2010 (2010-06-01) , pages 151-156, XP027074807, ISSN: 0920-1211, DOI: DOI:10.1016/J.EPLEPSYRES.2010.04.005 [retrieved on 2010-05-13]

## Description

The present invention relates to the use of benzoic acid, or a salt thereof in ruminants for the prevention and treatment of urolithiasis, for reduction of number and/or size of uroliths in urine, for increasing the urine density, for increasing the amount of urine excreted without changing the volume of water ingested, and/or to improve animal welfare.

Furthermore, the invention relates to a method of reducing the number and/or size of uroliths in the urine of ruminants.

Urolithiasis is the formation of stones (uroliths) in the urinary tract. Uroliths occur in either sex, but obstructive urolithiasis develops primarily in males because of anatomic differences. It is most commonly seen in castrated sheep and goats. Animals castrated at an early age are particularly prone to problems with uroliths as the process removes the hormone responsible for the adult formation of the penis and urethra.

While uroliths occur throughout the urinary tract it is the ones lodged in the urethra (urethroliths) that cause the most problems in goats and sheep. Urethroliths may preventing the passage of urine causing the animal pain and possible rupturing the bladder and leading to the death of the animal.

The main cause of the formation of uroliths is a dietary imbalance. The type of stone forms depends on the type of imbalance. Diets rich in grain and poor in roughage tend to have low calcium/phosphate ratios or be rich in magnesium. Such diets lead to the formation of struvite (ammonium magnesium phosphate) stones. Animals grazed on silica-rich soils may form silica uroliths. Calcium rich diets (for example containing subterranean clover) may lead to calcium carbonate urolith formation. Calcium oxalate urolith formation has been associated with feeding animals the tops from sugar beets. Other factors influencing stone formation include lack of drinking water and water that is rich in minerals. If one animal in a flock develops the condition all animals in the flock are at risk. Urolithiasis occurs most commonly in the winter months.

Signs seen in animals with urolithiasis include blood in the urine, straining and pain in urination, dribbling of urine restlessness, treading of the feet, tail swishing, teeth grinding, abdominal pain and goats may vocalize their pain. Animals with blockage of the urethra exhibit signs of colic such as stamping of the hind feet and circling motions of the tail combined with a loss of appetite. The pain associated with urolithiasis may require the administration of pain relief to the animal

It is well known in the art that the incidence of uroliths in lambs can be reduced supplementing the feed with at least 1 % ammonium chloride. However, ammonium chloride cannot be used any more as a urolithiasis prevention strategy in ruminant feed since it has been re-classified as a veterinary drug in Europe. Moreover, (Bushman et al. 1967 J. Anim. Sci. 26: 1205-1204) have shown that an effective level of ammonium chloride (1.5 wt.-% of the total feed ration) in addition to reducing the number of uroliths, also decreased the animal weight gain because of decreased palatability. Moreover, chloride excreted in urine represent a growing concern regarding pollution of the environment with chemicals. Therefore, ammonium chloride is only used as a veterinary treatment having a negative impact on the overall animal performance.

Stewart et al. (1991: J. Anim. Sci. 69: 2225-2229) have also shown that an acidification of at least 0.82 pH units were necessary to significantly reduce the incidence of uroliths in lambs fed ammonium chloride.

EP 0 683 985 discloses an animal feed composition comprising benzoic acid or a salt thereof and an ammonium salt of a carboxylic acid to reduce the pH value of the excrements below 7 thereby reducing ammonia emissions. This application has so far been limited to pigs since the person skilled in the art expects that benzoic acid would be readily metabolized by the complex ecosystem (rumen) of the ruminant.

US 5603945 discloses a food product comprising fumaric acid for use in treatment of urinary calculosis, or urolithiasis in cats and dogs.

The goal of the present invention was to find a feed additive readily usable (authorized by food and feed safety authorities) in ruminants and that is able to prevent the formation and/or treat uroliths in the urine of ruminants thereby solving a key animal welfare problem.

The inventors of the present application now surprisingly found that benzoic acid can efficiently be used to reduce the number and/or size of uroliths that develop in the urine of ruminants fed a diet which increases the risk of urolithiasis. In contradistinction to the solutions of the prior art, benzoic acid is known to be safe for the animal, and not harmful to the environment since it is extensively used as a feed preservative.

It was not to be foreseen by the person skilled in the art that addition of benzoic acid to the feed of a ruminant would trigger such a strong reduction in the number and or size of uroliths because the effect on the urine acidification is fairly moderate in ruminants (about 0.2 pH units). Therefore, the present invention provides a feed concentrate comprising benzoic acid, or a salt thereof for use in the treatment and/or prevention of urolithiasis in ruminants.

The term "urolithiasis" means a known disease in sheep characterised by the development of calculi in the urinary tract. This disease is often found in small ruminants, with an increased incidence in castrated males. It is often the result of an unbalance in Phosphorous/Calcium resulting from a feeding regiment rich in concentrate.

The term "feed concentrate" means a preparation used in ruminant nutrition to provide the nutrients that forage alone cannot provide. This is particularly true in the case of high-producing animals. There are also times and situations where concentrates are a more economical source of nutrients. There are two types of concentrate feeds: carbonaceous and proteinaceous. Carbonaceous concentrates or "energy" feeds tend to be low in protein (8-11 %). They include the cereal grains -corn, barley, wheat, oats, milo, and rye. Proteinaceous concentrates or "protein supplements" contain high levels of protein (> 15 %) and may be of animal or plant origin. They include soybean meal, cottonseed meal, and fish meal.

Benzoic acid acids and/ or its salts can be sourced from Sigma Chemicals. Preferred salt according to the present invention is selected from the group of sodium (Na), Potassium (K), and Calcium (Ca).

In yet another embodiment, the ruminant is selected from the group of cattle, sheep and goats, preferred animals are sheep and goats, and more preferred, are castrated male sheep and goats.

The feed concentrate according to the present invention contains benzoic acid or its salt wherein the total benzoic acid concentration in the concentrate represents 0.1 to 2 wt.-% of the total daily ration. In a preferred embodiment the concentration represents 0.5 to 1 wt.-% of the total daily ration.

The feed concentrate according to the present invention is used for reducing the number and/or size of uroliths in the urine, and/or for increasing the amount of urine excreted without changing the volume of water ingested, and/or for increasing the urine density. The feed concentrate according to the present invention is used for reducing the number of uroliths in urine by at least 20 % and reducing the average size of uroliths in urine by at least 20 % when compared to non-supplemented animals. Uroliths can easily be visualized by optical microscopy. Size and number of uroliths can easily be measured using a hemacytometer.

Preferably, the feed concentrate according to the present invention is used for increasing the amount of urine excreted without changing the volume of water ingested. Volume of urine can easily be measured in a metabolic cage.

More preferably, the feed concentrate according to the present invention is used to increase the urine density. Preferably the urine density is increased by 3 to 25 %.The density of urine is defined as its mass per unit volume. In sheep the average urine density is between 1.015 and 1.045 when measured by Cystocentesis. A higher urine density means a higher capacity of the kidney to concentrate urine.

Animal welfare is of growing concern in industrial agriculture. Urolithiasis symptoms include presence of blood in the urine, straining and pain in urination, dribbling of urine restlessness, treading of the feet, tail swishing, teeth grinding, abdominal pain and goats may vocalize their pain. Therefore, in another embodiment, the feed concentrate according to the present invention is used to improve animal welfare, meaning improving the animal wellness which can be assessed by the above mentioned behavioral parameters.

In spite of the adverse teachings of the prior art reviewed above, the present invention shows that by using benzoic acid in the diet of a ruminant, in an amount such that the pH of the urine is not significantly lowered, than, the beneficial effect of reducing uroliths size and/or number as well as improving animal welfare can be observed.

Preferably the ruminant for the above method is selected from the group consisting of sheep and goat.

The invention is further illustrated by the following examples.

### Examples

### Example 1: Feed concentrates for sheep containing benzoic acid

| Feed | Feed 1 | Feed 2 | Feed 3 |
|---|---|---|---|
| | % | % | % |
| Wheat | 4.00 | 4.00 | 4.00 |
| Barley | 25.00 | 25.00 | 25.00 |
| Fine bran | 25.00 | 25.00 | 25.00 |
| Soya cake 48 | 1.30 | 1.30 | 1.30 |
| Defatted rape cake | 8.00 | 8.00 | 8.00 |
| Beet pulp | 18.00 | 18.00 | 18.00 |
| Lucerne 17 | 16.00 | 15.50 | 14.50 |
| Calcium carbonate | 0.70 | 0.70 | 0.70 |
| Salt | 0.50 | 0.50 | 0.50 |
| Premix of ewe additives | 1.00 | 1.00 | 1.00 |
| Vevovitall | 0.50 | 1.00 | 2.00 |

### Example 2: Effect on benzoic acid fed via the concentrate to castrated sheep.

### 1. Materials and methods

### 1.1 Animals

Eight castrated adult Vendéen sheep were used in this study.

### 1.2 Housing

In the measurement period, the sheep were tied up in individual assessment cages, on a plastic slatted floor. Each cage is provided with a feed trough, a drinking trough, a droppings tray and a urine funnel.

Outside the measurement periods, the sheep were placed in individual cages on the ground on a bed of shavings (not secured).

### 1.3 Rations

The animals were fed 2 equal meals at 9:00 and 17:00. The complete pelleted feed is rationed and given as a function of the live weight of the animal at the beginning of the period, so that the animal is fed at maintenance according to INRA recommendations (40 g DM /kg P ^{0.75} ; INRA 1988). (DM = dry matter).

The data for the formulated concentrated feed is as follows:
- 0.83 MFU, 92 g IDP (MFU = Milk Fodder Unit; IDP = Intestinal Digestible Protein)
- 14 % TNM, 13 % crude cellulose (TNM = Total Nitrogen Matter)
- 4.6 g/kg P
- 12.6 g/kg Ca

For the purposes of the trial, the control feed was formulated to present a Phosphorous risk (Ca/P = 2.7) and an elevated cation-anion balance, i.e. 90.4 mEq/kg DM. The feeds were manufactured at the INZO experimental unit in the form of 8 mm pellets. The composition is set out in detail in Table 1 and Table 2.

Benzoic acid was from DSM Nutritional Products in the form of VevoVitall.

The composition of the feeds is described in Tables 1 and 2.

**Table 1: Composition of the feeds**

| Feed | Control | VEVOVITALL 0.5 | VEVOVITALL 1 |
|---|---|---|---|
| Feed code | 3042 | 3043 | 3044 |
| | % | % | % |
| Wheat | 4.00 | 4.00 | 4.00 |
| Barley | 25.00 | 25.00 | 25.00 |
| Fine bran | 25.00 | 25.00 | 25.00 |
| Soya cake 48 | 1.30 | 1.30 | 1.30 |
| Defatted rape cake | 8.00 | 8.00 | 8.00 |
| Beet pulp | 18.00 | 18.00 | 18.00 |
| Lucerne 17 | 16.50 | 16.00 | 15.50 |
| Calcium carbonate | 0.70 | 0.70 | 0.70 |
| Salt | 0.50 | 0.50 | 0.50 |
| Premix of ewe additives | 1.00 | 1.00 | 1.00 |
| Vevovitall | | 0.50 | 1.00 |

**Table 2: Chemical analyses of the feeds**

| | 3042 | 3043 | 3044 |
|---|---|---|---|
| | CONTROL | VEVOVITALL 0.5 | VEVOVITALL 1 |
| Moisture | 12.42 | 13.05 | 12.68 |
| in % DM | | | |
| Minerals | 7.30 | 7.59 | 7.66 |
| Proteins | 15.81 | 15.76 | 16.32 |
| Cellulose | 13.66 | 13.12 | 13.11 |
| Calcium | 1.29 | 1.33 | 1.34 |
| Phosphorus | 0.56 | 0.57 | 0.57 |
| Chlorides | 0.73 | 0.78 | 0.74 |
| Sodium | 0.32 | 0.33 | 0.33 |
| Potassium | 1.16 | 1.15 | 1.17 |

### 1.4 Experimental scheme

The trial is conducted in two periods (P1 and P2). It is preceded by an in-cage measurement day (designated D0) just before the start of the adaptation period to the control diet (P1) and is followed by a post-experimental period (P3).

First period (P1): all the animals are given the control feed. This part rolls out over 3 weeks and is composed of 1 treatment.

**Table 3: experimental period P1:**

| Days | 1 to 12 | 13 to 19 |
|---|---|---|
| Feed | Control feed | |
| Housing of the animals | On the ground | In cages |

Second period: The animals are given either the control feed (2 animals) or one of the two experimental feeds (2 X 3 animals). This period is composed of 4 weeks and consists of 3 treatments.

### Table 4: experimental period P2:

| Days | 1 to 19 | 20 to 26 |
|---|---|---|
| Feed | Control or experimental feed | |
| Housing of the animals | On the ground | In cages |

Third period: The animals are given the control feed. This period is composed of 2 weeks and consists of 1 treatment.

**Table 5: experimental period P3:**

| Days | 1 to 5 | 6 to 12 |
|---|---|---|
| Feed | Control feed | |
| Housing of the animals | On the ground | In cages |

**Table 6: Allocations of animals (by drawing lots):**

| | Animal A | Animal B | Animal C | Animal D | Animal E | Animal F | Animal G | Animal H |
|---|---|---|---|---|---|---|---|---|
| Identification | 10 | 104 | 119 | 51 | 67 | 60 | 88 | 73 |
| Period 1 | 3042 | 3042 | 3042 | 3042 | 3042 | 3042 | 3042 | 3042 |
| Period 2 | 3044 | 3043 | 3042 | 3042 | 3043 | 3044 | 3043 | 3044 |
| Period 3 | 3042 | 3042 | 3042 | 3044 | 3042 | 3042 | 3042 | 3042 |

### 1.5 Measurements and samples

### 1.51 Weighting of the animals:

The animals are weighed on the first day of each period (P1, P2 and P3).

### Measurements on D0 and P3

Measurement on D0 is designed to check the consistency of the urinary parameters between the sheep, in particular their predisposition or not to microcrystals. Period 3 enables the persistence of the treatment to be measured (after stopping one week of the treatment). The measurements take place over one week for P3, which corresponds to 5 days of measurements. The animals are placed in cages on a Friday (D6) and taken out the following Friday (D12). Measurement on D0 is a single measurement.

### 1.52 The quantities of water drunk are calculated per day and per sheep.

### 1.53 Urine:

Immediately after distribution of the morning diets, the full urine trays are replaced by clean empty trays.

The urine is then weighed per day and per sheep (24 hour urine). A sample of fresh urine is taken each day per sheep after the animals have been fed. Examination of the urine pH is carried out immediately using a pH meter.

Once a week (Thursday), a sample of urine is taken per sheep to examine the microscope slides and investigate microcrystals. On the same sample, the urine density is measured and any presence of leucocytes investigated using urine strips.

### 1.54 Specific measurements in P1 and P2:

Period 1 is used to obtain values with the control diet for each sheep. Period 2 is strictly speaking the experimental period.

The measurement phases take place over one week for each period, corresponding to 5 days of measurements. The animals are placed in cages on a Friday (D13 for P1 and D20 for P2) and taken out the following Friday (D19 or D26, respectively for P1 and P2).
» The quantities distributed are recorded each day: straw, concentrated feeds, water, per day and per sheep.
» The quantities of feed and straw refused are recorded per day and per sheep to ascertain ingestion.
» The quantities of water drunk are calculated per day and per sheep.
» Urine: Immediately after distribution of the morning diets, the full urine trays are replaced by clean empty trays.

The urine is then weighed per day and per sheep (24 hour urine).

After homogenization, one double sample is taken per sheep. It is set up by collecting in each flask 5 % of the volume excreted during the day per sheep. The flasks are kept in the freezer. Thus, 16 samples of urine per sample day and per period are set up (8 sheep x 2 samples).

One sample is sent to the laboratory (after grouping) for analysis; the other is kept until the analyses have been validated.
- Grouping procedure:
   - The urine pots are thawed.
   - One sample grouping all of the daily collections is set up for each animal and per period.
   - The samples are sent to the laboratory to measure the P.

A sample of fresh urine is taken each day per sheep after the animals have been fed. Examination of the urine pH is carried out immediately using a pH meter.

Once a week (Thursday), one sample of urine is taken per sheep for examination on microscope slides and investigation of microcrystals. On the same sample, the urine density is measured and any presence of leucocytes investigated using urinary strips.
» The maximum temperature for the day will be taken during the measurement periods.
» Any abnormal behavior in a sheep or any incident will be noted. Any sick animal will be identified and will only be treated as a last resort since treatment may lead to exclusion from the trial.

### 1.55 Specific measurements in P2:

Period 2 constitutes the experimental period. It is designed to measure the effect of VEVOVITALL (benzoic acid) on the urine. However, this product has never, to our knowledge, been used on sheep. In some species (non-ruminants), particularly the cat, ingestion leads to disorders. It can also cause refusal in some animals, depending on the dose administered (pigs). It is therefore important during the adaptation phase and in particular during the first week (D1 to D7) to check the behavior of the animals and to measure ingestion in order to address any problems as quickly as possible.

### 1.6 Laboratory analyses

On concentrates: DM (dry matter), MM (mineral matter), TNM (total nitrogen matter), CC (crude cellulose), P (Phosphorus), Ca (Calcium)

On urine: - Phosphorus - Microscope examination to investigate and identify microcrystals.-Presence of leucocytes by examination of urine strips.

### 1.7 Statistics

Explanatory variables: feed, sheep.

Variables to be explained: water drunk, quantities of urine, urine density, water / urine ratio, urinary phosphorus, pH, status of urinary microcrystals. Model: Y = average + effects of the explanatory variables + interaction + error.

### 2. Results

All the results of the trial are set out below. For information, it was not possible to keep one of the animals (animal C) in the trial for the last period due to problems with urinary calculi. In addition, animal D (control batch) was fed with feed 3044 in period 3 due to symptoms of urinary calculi.

### 2.1 Situation of the animals at the start of the trial

On D0, the animals did not present any particular problems. The urine analyses (pH and micro-crystals) did not show any actual particular predispositions in the animals to risks of calculi. However, animal H presented microcrystals on examination of the slides. It was therefore decided to place it in the group of animals given feed 3044 (Vevovital 1) in order to avoid introducing any bias into the control batch ("false positive").

### 2.2 Weight of the animals

On the whole, the animals used in this trial (Table 7) did not present any problems of excessive weight loss or gain.

**Table 7: Weight of the animals (kg)**

| Weight of the sheep | A | B | C | D | E | F | G | H |
|---|---|---|---|---|---|---|---|---|
| Weight 0 - Start Period 1 | 73 | 84 | 87 | 80 | 74 | 85 | 78 | 71 |
| Weight - Start Period 2 | 74 | 85 | 88 | 84 | 72 | 85 | 84 | 73 |
| Weight - Start Period 3 | 73 | 85 | ND | 83 | 73 | 85 | 84 | 73 |

One of the animals (G) showed a high weight gain (6 kg) in period 1, probably due to the reduction in physical activity after the start of the trial. Its weight then stabilized. There was no evidence of any effect of the feed (P= 0.85) on the weight delta between P 2 and P 1.

### 2.3 Ingestion

The quantities of feed and straw ingested are reported in Tables 8 and 9.

The control feed was not refused. One of the animals refused feed VEVOVITALL 1, particularly during the adaptation phase. Although it only occurred in one animal, this result must be taken into consideration.

**Table 8: Quantities and types of feed distributed**

| | | A | B | C | D | E | F | G | H |
|---|---|---|---|---|---|---|---|---|---|
| Period 1 | Feed | 3042 | 3042 | 3042 | 3042 | 3042 | 3042 | 3042 | 3042 |
| | Quantity g/d (gross) | 1130 | 1260 | 1300 | 1200 | 1150 | 1270 | 1190 | 1110 |
| Period 2 | Feed | 3044 | 3043 | 3042 | 3042 | 3043 | 3044 | 3043 | 3044 |
| | Quantity g/d (gross) | 1150 | 1270 | 1300 | 1260 | 1120 | 1270 | 1260 | 1130 |
| Period 3 | Feed | 3042 | 3042 | X | 3044 | 3042 | 3042 | 3042 | 3042 |
| | Quantity g/d (gross) | 1135 | 1270 | X | 1250 | 1130 | 1270 | 1260 | 1135 |

**Table 9: Straw consumption**

| Straw in g/d (gross) | A | B | C | D | E | F | G | H |
|---|---|---|---|---|---|---|---|---|
| Period 1 | 700 | 700 | 700 | 700 | 700 | 700 | 700 | 700 |
| Period 2 | 700 | 700 | 700 | 700 | 700 | 700 | 700 | 700 |
| Period 3 | 700 | 700 | 700 | 700 | 700 | 700 | 700 | 700 |

The animals did not refuse straw.

### 2.4 Quantities of water drunk

The results show a difference in the quantity of water drunk (P = 0.06) by the animals as a function of the feed given during period 2. The animals given the control feed had a higher average water consumption (3481 g/d) than the animals given Vevovitall 0.5 (2964 g/d) which themselves consumed more water than the animals given Vevovitall 1 (2485 g/d).

These results suggest a need for water in the animals given the control diet higher than that in the animals fed with the diets containing benzoic acid.

In period 3, all the animals increased their water consumption (P = 0.07), the average being 2.8 to 3.4 L of water drunk, thus confirming the previous results.

### 2.5 Quantities of urine excreted

The results do not show any differences (P = 0.42) in urine volumes (expressed in g/d) excreted by the animals. However, excluding animal C which presents an alternatively elevated (4241 g/d) then low (400 g/d) urine output, the volume of urine produced by the animals in the batches given feeds 3043 and 3044 (759.1 and 918.7 g/d respectively), i.e. containing benzoic acid, tends to be greater than that of animals not given benzoic acid (578.2; P = 0.06). It therefore appears that benzoic acid tends to promote diuresis, more particularly at a high concentration.

More remarkably, above the volume excreted by the animals, it is interesting to note that the volume of urine excreted by the animals given benzoic acid is more constant than that of animals given the control feed. These results therefore seem to suggest a greater urinary comfort in the animals treated with benzoic acid.

To recap, the normal daily urine volume in a sheep is between 10 and 40 mL urine/kg life weight according to Reece et al. 2009. (The urinary system, in: Functional anatomy and physiology of domestic animals, 4th ed. Ames: Wiley-Blackwell, 312 - 358). All the results on animals in this trial are within this range (i.e. between 0.7 and 3.5 L), apart from animal C where the volume largely exceeded 4 L of urine or dropped below 400 mL, and for animal D (control diet) where the quantities of urine remained between 70 and 1240 mL / 24 hours.

No difference was observed between periods 2 and 3 (P = 0.6).

Analysis of the ratio of volume of urine excreted to the quantity of water drunk by the animals, confirms the previous results. In fact, if animal C is removed from the analysis, the urine/water drunk ratio rises to 0.24, 0.31 and 0.46 respectively for feeds 3042, 3043 and 3044, suggesting that with the same quantity of water drunk, urine excretion is greater with benzoic acid.

### 2.6 Urine density

To recap, the theoretical urine density in sheep is between 1.015 and 1.045 when measured by cystosynthesis. In our case, the samples were taken using a refractometer on fresh urine but recovered in tubes placed under the cages during spontaneous micturation, which necessarily involves a slight fecal contamination of the urine and can thus cause a moderate increase in the density of the urine. However, since all the samples were obtained in the same way, it is possible to compare the batches with one other.

The analyses (see Table 10) show that the urine density of the animals given the feed containing benzoic acid is higher than that of the animals given the control diet (P < 0.001).

These results suggest a better capacity of the kidneys for concentrating urine in the animals given benzoic acid. In fact, a urine density below 1.02 (known as isosthenuric urine) in general reflects a dysfunction of the urinary system. In period 3, with the control feed, the urine density tends to fall, from 1.043 to 1.030 (P = 0.1).

**Table 10: Average urine density**

| **Animal code** | **Feed code** | **Treatment** | **Average Urine density in P2** |
|---|---|---|---|
| A | 3044 | Vevovitall 1 | 1.043 |
| B | 3043 | VevoVitall 0.5 | 1.058 |
| C | 3042 | Control | 1.020 |
| D | 3042 | Control | 1.021 |
| E | 3043 | VevoVitall 0.5 | 1.045 |
| F | 3044 | Vevovitall 1 | 1.046 |
| G | 3043 | VevoVitall 0.5 | 1.050 |
| H | 3044 | Vevovitall 1 | 1.040 |

### 2.7 Urinary phosphorus

The analyses show that the urinary phosphorus concentration of the animals that were given the control ration (13.3 mg/kg) is significantly higher than in the animals given the feeds containing benzoic acid (6.7 and 6.6 mg/kg respectively for feeds 3043 and 3044).

An increase in the concentration of phosphorus in the feed increases the concentration of phosphate ions in the urine (Radostits et al., 2000, Veterinary Medicine). Calcium counteracts the absorption of phosphorus by the intestine. A low calcium content in the ration therefore causes a high urinary excretion of phosphorus. The rations based on pellets are associated with a strong incidence of struvite calculi. In fact, ruminant saliva is rich in phosphorus, and this salivary phosphorus is eliminated by the intestinal tract. However, pellets need less mastication, therefore less saliva and consequently a lower quantity of phosphorus is eliminated by this route. The urinary concentration is therefore increased, promoting these calculi (Schott et al., 2002, Large Animal Internal Medicine).

Thus, the addition of benzoic acid to the ration enables the concentration of phosphorus in the urine to be lowered.

### 2.8 Urine pH

To recap, the ranges of variations in urine pH commonly allowed are comprised between 7.8 and 8.5.

The analyses show here a mild effect of benzoic acid on the urine pH. In fact, the average urine pH in animals given the control diet is 8.62 against respectively 8.43 and 8.40 for animals given the feed containing benzoic acid.

In period 3, the urine pH tends to increase by +0.1 on average demonstrating a very mild effect of benzoic acid on urine pH.

### 2.9 Microscopic study of urine (investigation of microcrystals)

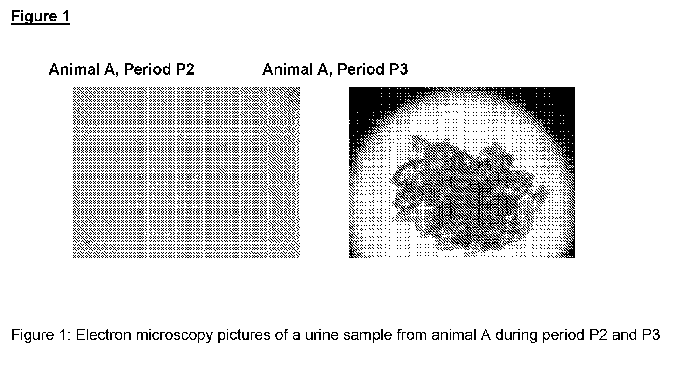

Analysis of the microscope slides identified the presence or not of urinary microcrystals. A score has been given (Table 11), with 0 representing an absence of crystals and 4 a urine containing a lot of crystals. The slides were photographed and are shown in Figure 1.

Following the allocation of the score, a statistical analysis was carried out. This shows that the score for animals given the control diet in P2 is higher (P = 0.017) than that of animals given Vevovitall.

**Table 11: Urine score as a function of the presence or not of crystals in experimental period P2**

| **Animal** | **Feed code in P 2** | **Treatment** | **Microcrystal scoring in P 2** |
|---|---|---|---|
| A | 3044 | Vevovitall 1 | 0 |
| B | 3043 | VevoVitall 0.5 | 2 |
| C | 3042 | Control | 4 |
| D | 3042 | Control | 4 |
| E | 3043 | VevoVitall 0.5 | 1 |
| F | 3044 | Vevovitall 1 | 0 |
| G | 3043 | VevoVitall 0.5 | 1 |
| H | 3044 | Vevovitall 1 | 1 |

The photgraphs (Figure 1) visually show that no crystals were detected at the end of the experimental treatment with 1% benzoic acid, while large crystals were observed before treatment, or after at the end of the post-experimental phase in the same animal. Moreover, a reduction in the number of crystals in animal H was also observed in P2 (animal presenting crystals in P1).

In period 3, all the animals present more crystals than in P2.

Thus, Vevovitall seems effective in limiting the appearance of urinary crystals in sheep, probably by the reduction in urine pH that it causes.

### 3. Conclusions

This study shows a positive effect of diets containing benzoic acid on the urinary system of sheep.

Benzoic acid fed at 0.5 to 1 wt.-% of the dry matter is efficient in reducing the number and size of microcrystals in urine (uroliths) without drastically acidifying the urine. Furthermore, it promotes the excretion of the urine on consumption of identical volume of water. It also improves the urinary function, which is highlighted by a better concentration function of the urine.

In conclusion, benzoic acid is effective in preventing ovine urolithiasis.

## Claims

1. Feed concentrate comprising benzoic acid, or a salt thereof for use in the treatment and/or prevention of urolithiasis in ruminants.

2. The feed concentrate according to claim 1, wherein the benzoic acid salt is a sodium, potassium or calcium salt.

3. The feed concentrate according to any of claims 1 to 2, wherein the ruminant is selected from the group consisting of cattle, sheep and goat.

4. The feed concentrate according to any of claims 1 to 3, wherein the concentration of the benzoic acid or salt thereof in the concentrate is between 0.1 and 2 wt.-% of the total daily ration.

5. The feed concentrate according to any of claims 1 to 4, wherein the concentration of the benzoic acid or salt thereof in the concentrate is between 0.5 and 1 wt.-% of the total daily ration.

## Patentansprüche

1. Futterkonzentrat, das Benzoesäure oder ein Salz davon enthält, zur Verwendung in der Behandlung und/oder Vorbeugung von Urolithiasis bei Wiederkäuern.

2. Futterkonzentrat nach Anspruch 1, wobei das Benzoesäuresalz ein Natrium-, Kalium- oder Kalziumsalz ist.

3. Futterkonzentrat nach einem der Ansprüche 1 bis 2, wobei der Wiederkäuer aus der Gruppe bestehend aus Rindern, Schafen und Ziegen ausgewählt ist.

4. Futterkonzentrat nach einem der Ansprüche 1 bis 3, wobei die Konzentration an Benzoesäure oder einem Salz davon in dem Konzentrat zwischen 0,1 und 2 Gew.-% der Gesamttagesration beträgt.

5. Futterkonzentrat nach einem der Ansprüche 1 bis 4, wobei die Konzentration an Benzoesäure oder einem Salz davon in dem Konzentrat zwischen 0,5 und 1 Gew.-% der Gesamttagesration beträgt.

## Revendications

1. Aliment concentré comprenant de l'acide benzoïque ou un sel de celui-ci pour l'utilisation dans le traitement et/ou la prévention d'urolithiase chez les ruminants.

2. Aliment concentré selon la revendication 1, dans lequel le sel d'acide benzoïque est un sel de sodium, de potassium ou de calcium.

3. Aliment concentré selon l'une quelconque des revendications 1 et 2, le ruminant étant choisi parmi le groupe constitué de bétail, moutons et chèvres.

4. Aliment concentré selon l'une quelconque des revendications 1 à 3, dans lequel la concentration en acide benzoïque ou son sel dans le concentré est comprise entre 0,1 et 2 % en poids de la ration quotidienne totale.

5. Aliment concentré selon l'une quelconque des revendications 1 à 4, dans lequel la concentration en acide benzoïque ou son sel dans le concentré est comprise entre 0,5 et 1 % en poids de la ration quotidienne totale.
